# EUROPÄISCHE PATENTSCHRIFT

(11) **EP 3 724 461 B1**
(45) Veröffentlichungstag und Bekanntmachung des Hinweises auf die Patenterteilung: **16.10.2024**
(21) Anmeldenummer: 18822318.4
(22) Anmeldetag: 12.12.2018
(51) Int. Cl.: F01L 1/047, B21D 53/84, F16H 53/02

(54) **GEBAUTE NOCKENWELLE, SOWIE VERFAHREN ZUR HERSTELLUNG EINER GEBAUTEN NOCKENWELLE**
ASSEMBLED CAMSHAFT AND METHOD FOR PRODUCING AN ASSEMBLED CAMSHAFT
ARBRE À CAMES RAPPORTÉES ET SON PROCÉDÉ DE FABRICATION

(30) Priorität: 13.12.2017 DE 102017222607
(43) Veröffentlichungstag der Anmeldung: 21.10.2020
(73) Patentinhaber: thyssenkrupp Dynamic Components TecCenter AG, 9492 Eschen (LI); thyssenkrupp AG, 45143 Essen (DE)
(72) Erfinder: JUNGE, Volker, 38855 Wernigerode (DE)
(74) Vertreter: thyssenkrupp Intellectual Property GmbH
(86) Internationale Anmeldenummer: PCT/EP2018/084468
(87) Internationale Veröffentlichungsnummer: WO 2019/115581

(56) Entgegenhaltungen:
- DE-A1- 102008 053 723
- DE-A1- 19 710 847
- DE-C2- 19 710 847
- JP-A- 2002 258 675
- JP-A- 2012 021 594
- US-A1- 2006 064 872

## Beschreibung

Die vorliegende Erfindung betrifft eine gebaute Nockenwelle und ein Verfahren zur Herstellung einer gebauten Nockenwelle, wobei die Nockenwelle als eine Schiebenockenwelle ausgebildet ist und auf der Grundwelle axial feste Funktionselemente, wie beispielsweise Nocken, sowie axial verschiebbare Nocken aufweist.

### STAND DER TECHNIK

Eine gebaute Nockenwelle zum Einbau in eine Brennkraftmaschine ist aus der DE 10 2011 103 544 A1 bekannt. Bei der darin beschriebenen Nockenwelle weist die Grundwelle eine Außenverzahnung auf, mittels welcher Schiebenockeneinheiten axial auf der Grundwelle geführt werden und drehfest mit der Grundwelle verbunden sind. An der Außenverzahnung befestigte Lagerringe dienen zur Lagerung und Führung der Nockenwelle in der Brennkraftmaschine. Die Lagerelemente werden mittels eines Pressverbandes insbesondere thermisch gefügt. Als nachteilig ist hier jedoch zu betrachten, dass die Lagerringe mit Überdeckung über die Außenverzahnung geschoben werden bzw. beim thermischen Fügen große Temperaturunterschiede auf die Nockenwelle oder die Komponenten einwirken. Eine gebaute Nockenwelle, bei der eine Nabe auf kurzen Abschnitten der Grundwelle verschiebbar ist, wird durch die US 2006/064872 offenbart.

### OFFENBARUNG DER ERFINDUNG

Es ist daher die Aufgabe der vorliegenden Erfindung, die voranstehend beschriebenen Nachteile bei einer gebauten Nockenwelle, insbesondere einem Verfahren zur Herstellung einer gebauten Nockenwelle zu beseitigen. Es soll ein Verfahren zur Herstellung einer Nockenwelle sowie eine danach hergestellte Nockenwelle bereitgestellt werden, bei dem kein Temperatureintrag in die axial feste bzw. die axial nicht verschiebbare Nabe erfolgt. Ferner soll ein Verfahren zur Herstellung einer Nockenwelle bereitgestellt werden, bei dem die axial nicht verschiebbare Nabe lediglich auf kurzen Abschnitten über eine Verzahnung der Grundwelle geschoben wird.

Die voranstehende Aufgabe wird gelöst durch eine gebaute Nockenwelle mit den Merkmalen des unabhängigen Anspruches 1 sowie durch ein Verfahren zum Herstellen einer gebauten Nockenwelle mit den Merkmalen gemäß des unabhängigen Anspruches 6.

Weitere Merkmale und Details sowie Ausgestaltungen und Weiterbildungen der Erfindung ergeben sich aus den Unteransprüchen, der Beschreibung und den Zeichnungen. Dabei gelten Merkmale und Details, die im Zusammenhang mit der erfindungsgemäßen Nockenwelle beschrieben sind, selbstverständlich auch im Zusammenhang mit dem erfindungsgemäßen Herstellverfahren und jeweils umgekehrt, so dass bezüglich der Offenbarung zu den einzelnen Erfindungsaspekten stets wechselseitig Bezug genommen wird beziehungsweise werden kann.

Gemäß der Erfindung umfasst die gebaute Nockenwelle für eine Brennkraftmaschine eine Grundwelle mit einer sich zumindest abschnittsweise axial entlang der Grundwelle erstreckenden Außenverzahnung, sowie mindestens eine Nabe mit einer Innenverzahnung, welche mit der Außenverzahnung der Grundwelle derart korreliert, dass die Nabe drehfest und axial unverschiebbar mit der Grundwelle verbundenen ist, wobei die Außenverzahnung mindestens einen sich zumindest abschnittsweise axial entlang der Grundwelle erstreckenden Formschlussteilbereich oder Kraftschlussteilbereich aufweist, um die Nabe zumindest formschlüssig oder kraftschlüssig anzuordnen. Des Weiteren schließt sich an den Formschlussteilbereich oder den Kraftschlussteilbereich zumindest ein sich zumindest abschnittsweise axial entlang der Grundwelle erstreckender Ausrichtbereich an. Dabei weist die Außenverzahnung wenigstens des Formschlussteilbereiches oder des Kraftschlussteilbereiches wenigstens zwei Zahnzwischenräume mit wenigstens zwei zueinander unterschiedlichen Breiten und die Innenverzahnung der Nabe zumindest einen Zahn, welcher eine mit einem der unterschiedlich breiten Zahnzwischenräume der Grundwelle korrelierende Breite aufweist, wobei die Kombination des zumindest einen Zahnes der Innenverzahnung der Nabe mit dem ersten Zahnzwischenraum der Außenverzahnung der Grundwelle einen Schiebesitz ausbildet. Dabei besteht zumindest die Kraftschlussverbindung der Nabe mit der Grundwelle zur axialen Fixierung der Nabe aufgrund einer Kombination von wenigstens dem eine zweite Breite aufweisenden zweiten Zahnzwischenraum der Grundwelle und dem zumindest einen nicht korrelierenden, eine erste Breite aufweisenden ersten Zahn der Innenverzahnung ausgebildete Pressverbindung. Vorteilhaft wird auf der Grundwelle eine Außenverzahnung ausgebildet und damit eine Möglichkeit geschaffen, verschiedene Naben axial entlang der Grundwelle zu führen und dabei drehfest mit dieser zu verbinden, wie dies beispielsweise bei Schiebenockensystemen der Fall ist. Für die drehfeste Verbindung der Grundwelle mit der Nabe stellt die Verzahnung der Grundwelle mehrere Formschlusselemente zur Ausbildung einer Formschlussverbindung bereit. Mit Vorteil wird im Ausrichtbereich kein Formschluss zwischen der Grundwelle und der Nabe mit ihrer Innenverzahnung ausgebildet, wodurch die Nabe in eine gewünschte Winkellage relativ zur Grundwelle bzw. deren Außenverzahnung gedreht bzw. verdreht werden kann. Mit Vorteil erstreckt sich der Ausrichtbereich über den gesamten Umfang der Grundwelle, wenigstens jedoch über einen Umfangsteilbereich, um die gewünschte Winkelausrichtung der Nabe relativ zur Außenverzahnung bzw. zur Grundwelle zu ermöglichen. Der Ausrichtbereich kann beispielsweise durch Abschleifen oder Abfräsen der Außenverzahnung ausgebildet werden. Ferner ist es möglich, dass im Ausrichtbereich keine Außenverzahnung auf der Grundwelle ausgebildet wird. Von Vorteil ist, dass bei der Kombination des wenigstens einen Zahnes der Innenverzahnung der Nabe, welcher eine definierte Breite aufweist, mit dem zumindest einen ersten Zahnzwischenraum der Außenverzahnung der Grundwelle, welcher eine erste Breite aufweist, einen Schiebesitz zwischen diesen ausgebildet wird. Hierdurch kann vorteilhaft die Nabe über die Außenverzahnung verschoben werden ohne die Außenverzahnung zu beschädigen. Vorteilhafterweise kann die unbeschädigte Außenverzahnung zur drehfesten Anbindung anderer Bauteile oder zur axialen Führung beim Verschieben genutzt werden. Vorteilhafterweise wird zur axialen Fixierung der Nabe auf der Grundwelle die Kombination des wenigstens einen Zahnes der Innenverzahnung und des eine zweite Breite aufweisenden zweiten Zahnzwischenraumes der Außenverzahnung genutzt, wodurch der Kopfkreis und/oder der Fußkreis der Außenverzahnung beim Überschieben der Nabe nicht beschädigt werden.

Die Größenverhältnisse der jeweiligen Breiten der Zahnzwischenräume oder der Zähne der Grundwelle zueinander, sind bevorzugt, wie nachfolgend erläutert, ausgebildet. Der erste Zahn oder Zahnzwischenraum ist breiter als der zweite Zahn oder Zahnzwischenraum. Als Basis für die Betrachtung kann beispielsweise die Breite auf der halben Zahnhöhe dienen. Dieselbe Bezugsbasis gilt vice versa für die Innenverzahnung der Nabe. Die entsprechenden Größenbeziehungen der weiteren relevanten Zahnbreiten oder Zahnzwischenräume entsprechen demselben Schema.

Die axial unverschiebbar zu fixierende Nabe kann beispielsweise ein Sensorgeberrad, ein Nocken zur Betätigung von Ventilen der Brennkraftmaschine oder ein Pumpennocken zur Betätigung einer Kraftstoffpumpe oder einer Vakuumpumpe sein. Es ist jedoch auch denkbar, dass die Nabe als ein gebauter Mehrfachnocken ausgebildet ist. Vorteilhaft ist zudem, dass der Ausrichtbereich für die Nabe mit ihrer Innenverzahnung keinen Formschlussteilbereich oder Kraftschlussteilbereich ausbildet, damit die Nabe in diesem Bereich keine drehfeste Verbindung mit der Grundwelle ausbildet und in ihre benötigte Winkellage gedreht bzw. verdreht werden kann, um dann in entsprechender Winkellage zumindest die Kraftschlussverbindung mit der Grundwelle zur axialen Fixierung der Nabe aufgrund einer zwischen mindestens dem eine zweite Breite aufweisenden zweiten Zahnzwischenraum der Außenverzahnung der Grundwelle, und dem Zahn der Innenverzahnung der Nabe, aufweisend eine mit der zweiten Breite des zweiten Zahnzwischenraumes nicht korrelierenden Breite, ausgebildeten Pressverbindung auszubilden.

Vorteilhaft kann die Außenverzahnung der Grundwelle beispielsweise als Vielzahnprofil, wie beispielsweise ein Keilwellenprofil oder Zahnnabenprofil mit Evolventenverzahnung ausgeführt sein. Die Außenverzahnung kann aber auch als ein Polygonprofil oder ein ähnliches Unrund ausgebildet sein, welches die drehfeste Fixierung der Nabe auf der Grundwelle beispielsweise in Form eines Kraftschlusses und/oder Formschlusses zur Übertragung eines Drehmomentes zwischen Nabe und Grundwelle sicherstellen kann.

Im Nahmen der Erfindung sind die zwei mit den unterschiedlichen Breiten ausgebildeten Zahnzwischenräume der Grundwelle umlaufend in einander abwechselnder Folge ausgebildet 11. Es ist somit eine Vielzahl von unterschiedlichen Zahnzwischenräumen vorgesehen, wodurch die axiale Sicherung gegen größere Kräfte ermöglicht wird. Es sind somit die unterschiedlich breiten Zahnzwischenräume der Außenverzahnung gleichmäßig über den Umfang verteilt, wodurch sich eine gleichmäßige Krafteinleitung in die Nabe ergibt.

Damit ist vorteilhaft die Winkelausrichtung der Nabe in entsprechender beispielsweise feiner Zahnteilung bzw. Aufteilung der Zahnzwischenräume möglich.

Bei einer bevorzugten und vorteilhaften Weiterbildung der Erfindung ist der eine erste Breite aufweisende Zahn der Innenverzahnung der Nabe umlaufend mehrfach und passend zu den ersten und zweiten Zahnzwischenräumen verteilt ausgebildet. Von Vorteil ist dabei die gleichmäßige Dehnung bzw. Formänderung der Nabe infolge der Pressverbindung. Sollte die Nabe jedoch eine über den Umfang der Grundwelle ungleichmäßige Drehmomenteinleitung bzw. Drehmomentbelastung erfahren, wie dies beispielsweise bei Nocken oder Pumpennocken der Fall ist, ist es jedoch auch denkbar, dass die Zahnzwischenräume mit ihren unterschiedlichen Breiten ungleichmäßig über den Umfang, dann beispielsweise an den wirkenden Drehmomentverlauf angepasst, verteilt sind. Damit lässt sich vorteilhaft die axiale Fixierung der Nabe auf der Grundwelle optimieren und die Pressverbindung zwischen Grundwelle und Nabe kann die wechselnden Belastungen besser ertragen.

Erfindungsgemäß weist die Innenverzahnung der Nabe einen zweiten Zahn mit einer zweiten Breite auf, wobei der zweite Zahn jeweils mit dem ersten Zahnzwischenraum und dem zweiten Zahnzwischenraum der Grundwelle einen Schiebesitz ausbilden kann und die ersten und zweiten Zähne umlaufend in einander abwechselnder Folge ausgebildet Auf diese Weise wird der zwischen der Grundwelle und der Nabe wirksame Formschlussteilbereich und damit der wirksame Formschluss und damit das übertragbare Drehmoment erhöht.

Besonders vorteilhaft ist dies für drehmomentübertragende Naben, wie beispielsweise Pumpennocken oder Nocken für Ventile.

Bei einer vorteilhaften Ausgestaltung sind der Formschlussteilbereich und/oder der Kraftschlussteilbereich durch den Ausrichtbereich in wenigstens zwei axial beabstandete Formschlussteilbereiche und/oder Kraftschlussteilbereiche aufgeteilt. Mit Vorteil kann die Nabe durch diese Anordnung bzw. Abfolge der Bereiche und entsprechender Kombination der Zähne und der korrelierenden Zahnzwischenräume über Bereiche der Außenverzahnung geschoben werden, ohne eine Pressverbindung auszubilden und die Verzahnung zu beschädigen. Erst in unmittelbarer Nähe der Endposition, nach dem Winkelausrichten der Nabe im Ausrichtbereich, wird die Pressverbindung zwischen der Grundwelle und der Nabe ausgebildet. Die Nabe muss somit lediglich über einen kurzen Bereich der Außenverzahnung verschoben werden. Die Kräfte für die Montage bzw. den Verschiebeweg können folglich reduziert und die Gefahr einer Beschädigung der Außenverzahnung minimiert werden.

Bei einer vorteilhaften Weiterbildung der Erfindung erstrecken sich mehrere Formschlussteilbereiche und/oder Kraftschlussteilbereiche und mehrere Ausrichtbereiche einander abwechselnd zumindest abschnittweise in axialer Richtung entlang der Grundwelle. Mit Vorteil ist damit ein Ausrichtbereich näher an der Endposition der Nabe und der Verschiebeweg der Nabe über die Verzahnung mit einem zwischen der Grundwelle und der Nabe ausgebildeten Presssitz kann reduziert werden.

Bei einer anderen bevorzugten Ausgestaltung der Erfindung ist die Innenverzahnung der Nabe mit ihrer axialen Erstreckung in wenigstens zwei Teilbereiche aufgeteilt. Bei entsprechender Auslegung bzw. Dimensionierung der axialen Erstreckung der Nabe mit ihrer Innenverzahnung und der Ausrichtbereiche, kann die Verzahnung der Nabe in die wenigstens zwei Ausrichtbereiche eingeschoben werden. Die Innenverzahnung der Nabe ist demzufolge vorteilhaft auf mehrere axial voneinander beabstandete Teilbereiche aufgeteilt. Vorteilhaft können somit die einzelnen Ausrichtbereiche axial kürzer ausgebildet werden, als ein einzelner Ausrichtbereich, der die entsprechende Innenverzahnung der Nabe bei einer Verdrehung bzw. beim Winkelausrichten aufnehmen soll. Die für andere Naben zur drehfesten Fixierung und zur axialen Führung auf der Grundwelle genutzte Außenverzahnung muss auf diese Weise in diesen Bereichen lediglich auf kleineren Teilstücken unterbrochen werden, wodurch das übertragbare Drehmoment erhöht oder die Kraftverteilung bei einer Drehmomentübertragung zwischen Welle und Nabe verteilt wird.

Gemäß dem erfindungsgemäßen Verfahren zur Herstellung einer gebauten Nockenwelle wird eine Grundwelle bereitgestellt, bei der die Oberfläche derart bearbeitet wird, dass auf zumindest einem Teilbereich, eine sich zumindest abschnittsweise axial entlang der Grundwelle erstreckenden Außenverzahnung ausgebildet wird, die für die zumindest eine Nabe mit ihrer Innenverzahnung wenigstens einen Formschlussteilbereich oder einen Kraftschlussteilbereich bereitstellt, um die Verbindung mit der Grundwelle zu gewährleisten. Ferner wird die Außenverzahnung derart ausgebildet, dass sie mehrere Zähne mit zumindest zwei Zahnzwischenräumen aufweist, und die wenigstens zwei Zahnzwischenräume zwei zueinander unterschiedliche Breiten aufweisen. Zudem wird bei dem erfindungsgemäßen Verfahren ein Ausrichtbereich auf der Grundwelle ausgebildet, der sich an den Formschlussteilbereich und/oder den Kraftschlussteilbereich axial anschließt und für die Nabe mit ihrer Innenverzahnung keinen Formschlussteilbereich und/oder Kraftschlussteilbereich ausbildet. Zudem wird eine Nabe mit in axialer Richtung verlaufender Innenverzahnung bereitgestellt, welche mit der Außenverzahnung der Grundwelle korreliert und die Innenverzahnung mindestens einen Zahn mit einer definierten Breite aufweist. Bei der Montage der Nabe wird die Nabe winkelausgerichtet auf die Außenverzahnung der Grundwelle aufgefädelt und die korrelierende Außenverzahnung der Grundwelle, mit ihrem ersten Zahnzwischenraum und die Innenverzahnung der Nabe, mit dem wenigstens einen Zahn der ersten Breite, bilden einen Schiebesitz aus. Hierfür ist die Breite des ersten Zahnzwischenraums der Außenverzahnung größer dimensioniert, als der eine erste Breite aufweisende Zahn der Innenverzahnung.

Die Nabe wird axial entlang des Formschlussteilbereiches der Grundwelle verschoben, bis die Innenverzahnung der Nabe in den Ausrichtbereich eingeschoben ist. Anschließend erfolgt ein winkelgenaues Ausrichten der Nabe relativ zur Außenverzahnung der Grundwelle, so dass zumindest eine Durchmesserpaarung bzw. Kombination von dem zweiten Zahnzwischenraum bzw. dem eine zweite Breite aufweisenden Zahnzwischenraum der Außenverzahnung und dem einen eine erste Breite aufweisenden Zahn der Innenverzahnung entsteht und diese axial fluchten. Anschließend erfolgt ein axiales Verschieben der Nabe entlang der Außenverzahnung der Grundwelle und damit dem Formschlussteilbereiches oder des Kraftschlussteilbereiches der Grundwelle bis zu deren Endposition, wobei aufgrund der vorhandenen Überdeckung zwischen dem zweiten Zahnzwischenraum der Außenverzahnung der Grundwelle und dem eine erste Breite aufweisenden Zahn der Innenverzahnung der Nabe (wobei auch mehrere zweite Zahnzwischenräume eine zweite Breite bzw. mehrere Zähne der Außenverzahnung eine erste Breite aufweisen können) eine Pressverbindung zwischen Grundwelle und Nabe ausgebildet und die Nabe gegen axiales Verschieben fixiert wird. Das bedeutet, dass hierfür ist die Breite des zweiten Zahnzwischenraums der Außenverzahnung kleiner dimensioniert, als der eine erste Breite aufweisende Zahn der Innenverzahnung. Durch die Pressverbindung zwischen der Grundwelle und der Nabe bilden diese einen Kraftschlussteilbereich aus, der die axiale Fixierung der Nabe auf der Grundwelle übernimmt, wobei der Formschlussteilbereich für die drehfeste Fixierung vorgesehen ist. Der Kraftschlussteilbereich umfasst wenigstens die axiale Länge der an dem Pressverbund beteiligten Innenverzahnung der Nabe. Der Kraftschlussteilbereich erstreckt sich wenigstens derart entlang der Grundwelle, dass die Länge der Innenverzahnung der Nabe und deren Endposition auf der Grundwelle umfasst sind. Es ist jedoch auch denkbar, dass der Kraftschlussteilbereich so definiert ist, dass er zudem den Verschiebeweg der Nabe umfasst.

Bei dem beschriebenen Verfahren ergeben sich sämtliche Vorteile, die bereits zu einer gebauten Nockenwelle gemäß dem ersten Aspekt der Erfindung beschrieben worden sind.

Bei einer bevorzugten Ausgestaltung des erfindungsgemäßen Verfahrens wird der Ausrichtbereich derart angeordnet, dass der Formschlussteilbereich und/oder der Kraftschlussteilbereich durch den Ausrichtbereich in wenigstens zwei axial beabstandete Formschlussteilbereiche und/oder Kraftschlussteilbereiche aufgeteilt wird bzw. werden. Vorteilhaft kann so der Verschiebeweg, das bedeutet der Weg, entlang dem die Nabe mit ausgebildetem Presssitz bzw. Überdeckung über die Außenverzahnung geschoben wird, verkürzt werden. Die Gefahr einer Beschädigung der Außenverzahnung wird somit reduziert.

Bei einer weiteren bevorzugten Ausgestaltung der Erfindung wird der Ausrichtbereich durch Aussparungen in der Außenverzahnung, beispielsweise durch Fräsen oder Schleifen, ausgebildet. Mit Vorteil kann beispielsweise eine durchgehende Außenverzahnung ausgebildet werden, welche dann durch wenigstens einen nachträglich eingebrachten bzw. ausgebildeten Ausrichtbereich unterbrochen und in verschiedene Formschlussteilbereiche oder Kraftschlussteilbereiche unterteilt wird. Auf diese Weise kann beispielsweise das Walzen zur Ausbildung der Verzahnung genutzt werden. Ferner kann die Außenverzahnung mit Vorteil wahlweise über den gesamten Umfang der Grundwelle oder lediglich in einem Umfangsteilbereich abgetragen werden, so dass sie für die Innenverzahnung der Nabe keinen Formschlussteilbereich und/oder Kraftschlussteilbereich mehr ausbildet. Die Außenverzahnung kann in den anderen Bereichen erhalten und für eine drehfeste Verbindung oder axiale Führung der oder anderer weiterer Naben mit bzw. an der Grundwelle genutzt werden. Alternativ ist es jedoch auch denkbar die Außenverzahnung mittels Kaltziehen bzw. Formziehen und dgl. auszubilden, wobei der Ausrichtbereich in diesem Fall vorzugsweise direkt beim Erzeugen der Außenverzahnung ausgebildet wird. Eine Nachbearbeitung mittels Schleifen oder Fräsen kann jedoch auch erfolgen. Mit Vorteil wird im Ausrichtbereich kein Formschluss zwischen der Grundwelle und der Nabe mit ihrer Innenverzahnung ausgebildet, wodurch die Nabe in eine gewünschte Winkellage relativ zur Grundwelle bzw. deren Außenverzahnung gedreht bzw. verdreht werden kann.

Bei einer weiteren bevorzugten Ausgestaltung der Erfindung wird der die erste Breite aufweisende Zahn der Innenverzahnung der Nabe umlaufend mehrfach ausgebildet und passend zu den Zahnzwischenräumen verteilt. Vorteilhaft kann damit die Pressverbindung zwischen Nabe und Grundwelle verbessert und eine bessere Sicherung gegen axiales Verschieben für größere Kräfte erzielt werden.

Ausführungsformen einer erfindungsgemäßen gebauten Nockenwelle sowie eine Ausführungsform eines erfindungsgemäßen Verfahrens zum Herstellen einer erfindungsgemäßen gebauten Nockenwelle werden nachfolgend anhand von Zeichnungen näher erläutert. Es zeigen jeweils schematisch und im Prinzip:
- Figur 1: eine Seitenansicht einer Ausführungsform einer erfindungsgemäßen gebauten Nockenwelle,
- Figur 2: einen vergrößerten Ausschnitt eines Querschnittes einer Ausgestaltung einer eine Außenverzahnung aufweisenden Grundwelle einer erfindungsgemäßen gebauten Nockenwelle,
- Figur 3: einen vergrößerten Ausschnitt eines Querschnittes einer Ausgestaltung einer eine Innenverzahnung aufweisenden Nabe einer erfindungsgemä-βen gebauten Nockenwelle,
- Figur 4: einen Verfahrensschritt bei der Durchführung einer Ausführungsform des erfindungsgemäßen Verfahrens,
- Figur 5: einen vergrößerten Ausschnitt eines Querschnittes der Grundwelle und der Nabe einer Ausführungsform einer erfindungsgemäßen gebauten Nockenwelle bei dem in der Figur 4 gezeigten Montageschritt,
- Figur 6: einen weiteren Verfahrensschritt bei der Durchführung einer Ausfüh-rungsform des erfindungsgemäßen Verfahrens,
- Figur 7: einen vergrößerten Ausschnitt eines Längsschnittes durch die Grund-welle und die Nabe einer Ausführungsform einer erfindungsgemäßen gebauten Nockenwelle während der Durchführung des Verfahrens-schrittes des erfindungsgemäßen Verfahrens, wie in der Figur 4 ge-zeigt,
- Figur 8: einen vergrößerten Ausschnitt eines Querschnittes der Grundwelle und der Nabe einer Ausführungsform einer erfindungsgemäßen Nockenwel-le während der Durchführung des weiteren Verfahrensschrittes des er-findungsgemäßen Verfahrens, wie in der Figur 6 gezeigt,
- Figur 9: einen weiteren Verfahrensschritt bei der Durchführung einer Ausfüh-rungsform des erfindungsgemäßen Verfahrens,
- Figur 10: einen vergrößerten Ausschnitt eines Querschnittes der Grundwelle und der Nabe einer Ausführungsform einer erfindungsgemäßen gebauten Nockenwelle während der Durchführung des weiteren Verfahrensschrit-tes des erfindungsgemäßen Verfahrens, wie in der Figur 9 gezeigt,
- Figur 11: einen weiteren Verfahrensschritt bei der Durchführung einer Ausfüh-rungsform des erfindungsgemäßen Verfahrens,
- Figur 12: einen vergrößerten Ausschnitt eines Querschnittes der Grundwelle und der Nabe einer Ausführungsform einer erfindungsgemäßen gebauten Nockenwelle während der Durchführung des weiteren Verfahrensschrit-tes des erfindungsgemäßen Verfahrens, wie in der Figur 11 gezeigt,
- Figur 13: einen vergrößerten Ausschnitt eines Querschnittes einer Grundwelle und einer Nabe einer weiteren Ausführungsform einer erfindungsgemä-βen gebauten Nockenwelle, und
- Figur 14: einen vergrößerten Ausschnitt eines Querschnittes einer Grundwelle und einer Nabe einer weiteren Ausführungsform einer erfindungsgemä-βen gebauten Nockenwelle

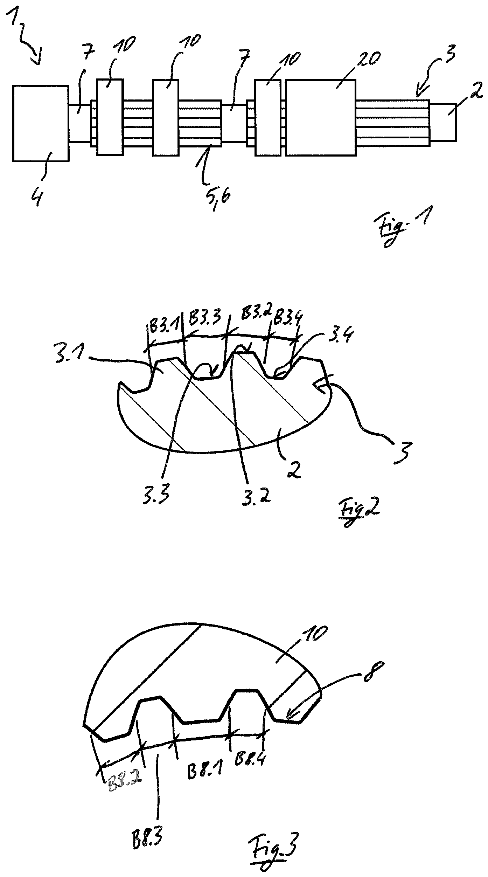

Elemente mit gleicher Funktion und Wirkungsweise sind in den Figuren 1 bis 14 jeweils mit denselben Bezugszeichen versehen.

In der Figur 1 ist schematisch eine Ausführungsform einer erfindungsgemäßen gebauten Nockenwelle 1 für eine Brennkraftmaschine gezeigt, die nach dem Prinzip einer Nockenwelle mit Schiebenockenelementen aufgebaut ist. Die gebaute Nockenwelle 1 umfasst wenigstens eine Grundwelle 2 mit einer Außenverzahnung 3 sowie wenigstens eine mit der Grundwelle drehfest und unverschiebbar verbundenen Nabe 10. Die Grundwelle 2 ist vorzugsweise stabförmig und kann als Hohlwelle oder Vollwelle ausgebildet sein. Die Nabe 10 kann beispielsweise ein Sensorrad oder ein Nocken, wie beispielsweise ein Pumpennocken oder ein Nocken zur Ventilbetätigung, sein. An einem Ende weist die Grundwelle 2 ein Endstück 4 auf, an dem beispielsweise ein Zahnrad (hier nicht gezeigt) zum Antreiben der Nockenwelle 1 angebracht werden kann. Das Endstück 4 kann einstückig mit der Grundwelle 2 ausgebildet oder separat gefertigt und nachträglich montiert sein. Ferner ist es denkbar, dass kein Endstück 4 an der Grundwelle 2 ausgebildet ist, sondern eine Durchmesservergrößerung oder dgl. vorgesehen ist. Allen Varianten ist gemeinsam, dass die Komponenten vorteilhaft nur von einer Seite der Nockenwelle 1 gefügt werden können.

Wie weiter in der Figur 1 dargestellt, kann die gebaute Nockenwelle 1 mehrere drehfest und axial unverschiebbare Naben 10 aufweisen. Die Außenverzahnung 3 der Grundwelle 2 ist beispielsweise durch ein Vielzahnprofil in Form einer Evolventenverzahnung gebildet. Das Vielzahnprofil der Außenverzahnung 3 kann auch als ein Polygon oder ähnliche Unrunde ausgebildet sein. Wesentlich ist hierbei, dass das Unrund die Nabe 10 drehfest fixieren und das zu übertragende Drehmoment von der Grundwelle 2 auf die Nabe 10 übertragen bzw. ertragen kann. Die Außenverzahnung 3 kann beispielsweise mittels eines Walz-, Fräs- und/oder Ziehverfahrens an der stabförmigen Grundwelle 2 ausgebildet werden. Die Außenverzahnung 3 bildet für die Nabe 10 einen Formschlussteilbereich 5 und/oder einen Kraftschlussteilbereich 6 aus. Der Formschlussteilbereich 5 dient beispielsweise zur axialen Führung der Naben 10 während der Montage. Die Nabe 10 ist mittels eines später genauer beschriebenen Pressverbandes axial unverschiebbar an der Grundwelle 2 fixiert. Eine drehfeste Verbindung zwischen Grundwelle 2 und Nabe 10 kann durch die Formschlussteilbereiche 5 der Nockenwelle 1 erfolgen. Eine wechselseitige Unterstützung bzw. Ergänzung von Formschlussteilbereich 5 und Kraftschlussteilbereich 6 zum Zwecke der Fixierung der Nabe 10 an der Grundwelle 2 in einer Endposition ist vorgesehen. Durch die Pressverbindung zwischen Grundwelle 2 und Nabe 10 wird der Kraftschlussteilbereich 6 der Grundwelle 2 ausgebildet. Der Kraftschlussteilbereich 6 erstreckt sich wenigstens derart entlang der Grundwelle 2, dass die Länge der Innenverzahnung 8 (wie in Figur 3 gezeigt) der Nabe 10 und deren Endposition auf der Grundwelle 2 umfasst sind. Es ist jedoch auch denkbar, dass der Kraftschlussteilbereich 6 zudem den Verschiebeweg der Nabe 10 umfasst. Daher ist es denkbar, dass beide Teilbereiche, nämlich ein Formschlussteilbereich 5 und ein Kraftschlussteilbereich 6 axial beabstandet zueinander derart auf der Grundwelle 2 ausgebildet sind, dass beide Teilbereiche sich zumindest abschnittsweise axial entlang der Grundwelle 2 erstrecken. Vorteilhaft erstrecken sich beide Teilbereiche vollständig in Umfangsrichtung um die Grundwelle 2 herum, d.h. die Formschlussverbindung bzw. die Kraftschlussverbindung zwischen Grundwelle 2 und Nabe 10 sind über den Umfang verteilt ausgebildet. Bei der in der Figur 1 gezeigten Ausgestaltung ist die Außenverzahnung 3 axial in zwei Teilbereiche und damit in zwei Formschlussteilbereiche 5 oder zwei Kraftschlussteilbereiche 6 aufgeteilt. Zwischen den beiden Teilbereichen sowie zwischen dem Endstück 4 und einem der beiden Teilbereiche, insbesondere dem zweiten Teilbereich der Außenverzahnung 3 ist jeweils ein Ausrichtbereich 7 ausgebildet.

Wird die Außenverzahnung 3 beispielsweise durch Walzen der stabförmigen Grundwelle 2 ausgebildet, kann durch nachträgliches Schleifen oder Fräsen dieser Außenverzahnung 3 der Ausrichtbereich 7 ausgebildet werden. Es ist jedoch auch möglich, dass die Außenverzahnung 3 lediglich abschnittsweise in axialer Länge auf der Grundwelle ausgebildet wird, wodurch auch die Ausrichtbereiche 7, insbesondere durch eine nicht erfolgende Bearbeitung der Oberfläche der Grundwelle 2 in Bereichen zwischen den bearbeiteten Abschnitten, bereits ausgebildet werden können. So kann beispielsweise bei einem Ziehprozess, bei dem ein stabförmiger Grundkörper durch eine Matrize gezogen bzw. geschoben wird, die Ausbildung der Ausrichtbereiche 7 und der Teilbereiche, insbesondere der Formschlussteilbereiche 5 bzw. der Kraftschlussteilbereiche 6, der Außenverzahnung 3 in Abhängigkeit ihrer axialen Anordnung auf der Grundwelle 2 vorgesehen werden. Vorzugsweise ist dann eine nachträgliche Bearbeitung der Grundwelle 2 bzw. der Außenverzahnung 3 zur Ausbildung des bzw. der Ausrichtbereiche 7 nicht erforderlich.

Des Weiteren weist die gebaute Nockenwelle 1 eine weitere, insbesondere axial verschiebbare Nabe 20 auf. Die Nabe 20 ist bei Verwendung der Nockenwelle 1 in einer Brennkraftmaschine axial entlang der Außenverzahnung, insbesondere entlang der gebildeten Teilbereiche, wie dem Kraftschlussteilbereich 6 und/oder dem Formschlussteilbereich 5 verschiebbar. Die weitere Nabe 20 stellt demnach ein Schiebenockenelement dar, wie es aus dem allgemeinen Stand der Technik bereits hinlänglich bekannt ist. Die Außenverzahnung 3 der Grundwelle 2 bildet für die Nabe 20 einen Formschlussteilbereich 5 aus. Die Nabe 20 ist durch den Formschlussteilbereich 5 axial entlang der Grundwelle 2 geführt und drehfest mit dieser verbunden.

Die Figur 2 zeigt einen vergrößerten Ausschnitt eines Querschnitts einer Grundwelle 2 einer Ausführungsform einer erfindungsgemäßen gebauten Nockenwelle. Die Au-βenverzahnung 3, beispielsweise als Evolventenverzahnung ausgeführt, insbesondere deren Zähne 3.1, 3.2 weisen jeweils eine Breite B3.1, B3.2 während deren Zahnzwischenräume 3.3, 3.4 jeweils eine Breite B3.3, B3.4 aufweisen. In Figur 2 ist exemplarisch jeweils ein erster Zahn 3.1 und ein zweiter Zahn 3.2 mit in Umfangsrichtung der Grundwelle jeweils daneben ausgebildeten Zahnzwischenräumen 3.3 bzw. 3.4 gezeigt. Der erste Zahnzwischenraum 3.3 ist hier breiter als der zweite Zahnzwischenraum 3.4. Die beiden Zähne 3.1, 3.2 weisen beispielsweise die gleiche Breite auf. Neben einem der beiden Zahnzwischenräume 3.3, 3.4 (hier im Uhrzeigersinn neben dem Zahnzwischenraum 3.4) kann ein weiterer erster oder ein weiterer zweiter Zahn ausgebildet sein. Es ist jedoch auch denkbar, dass ein weiterer Zahn mit einer weiteren Zahnbreite, insbesondere ein dritter Zahn mit einer zweiten Zahnbreite, ausgebildet wird. Je nach Ausgestaltung kann die Anzahl und die Verteilung der verschiedenen Zähne 3.1, 3.2 bzw. der verschiedenen Zahnzwischenräume 3.3, 3.4 variieren. Vorzugsweise sind die ersten 3.1 und die zweiten Zähne 3.2 bzw. die ersten 3.3 und die zweiten Zahnzwischenräume 3.4 gleichmäßig und einander abwechselnd über den Umfang der Grundwelle 2 verteilt ausgebildet.

In der Figur 3 ist ein vergrößerter Ausschnitt eines Querschnittes einer Nabe 10 einer Ausführungsform einer erfindungsgemäßen gebauten Nockenwelle 1 dargestellt. Die Nabe 10 weist eine Innenverzahnung 8 auf, die sich in axialer Richtung erstreckt. In der in Figur 3 gezeigten Ausführung weist die Innenverzahnung 8 erste Zähne 8.1 und zweite Zähne 8.2 mit jeweils zwei zueinander unterschiedlichen Breiten, nämlich einer ersten Breite 8.1 und einer zweiten Breite 8.2 auf. In Umfangsrichtung der gezeigten Nabenöffnung schließt sich an die ersten Zähne 8.1 bzw. an die zweiten Zähne 8.2 jeweils ein erster Zahnzwischenbereich 8.3 bzw. ein zweiter Zahnzwischenbereich 8.4 an. Der erste Zahn 8.1 ist in der hier gezeigten Ausgestaltung breiter ausgebildet als der zweite Zahn 8.2 der Innenverzahnung 8. Wie bereits zur Außenverzahnung 3 gemäß der Figur 2 erläutert, kann je nach Ausgestaltung die Anzahl und die Verteilung der ersten 8.1 und der zweiten Zähne 8.2 bzw. der ersten 8.3 und der zweiten Zahnzwischenräume 8.4 variiert werden. Vorzugsweise sind die verschiedenen Zähne 8.1, 8.2 bzw. die verschiedenen Zahnzwischenräume 8.3, 8.4 gleichmäßig abwechselnd über den Umfang der Innenverzahnung 8 der Nabe 10 verteilt.

Die Dimensionen der Innenverzahnung 8 der Nabe 10 sind derart gewählt, dass der erste Zahn 8.1 bzw. die ersten Zähne 8.1 mit dem ersten Zahnzwischenraum 3.3 bzw. den ersten Zahnzwischenräumen 3.3 der Außenverzahnung 3 der Grundwelle 2 einen Schiebesitz ausbilden. Die Kombination von einem bzw. mehreren ersten Zähnen 8.1 der Innenverzahnung 8 mit einem bzw. mehreren zweiten Zahnzwischenräumen 3.4 der Außenverzahnung 3 ergibt eine Überdeckung und damit einen Kraftschluss bzw. eine Pressverbindung zwischen der Grundwelle 2 und der Nabe 10.

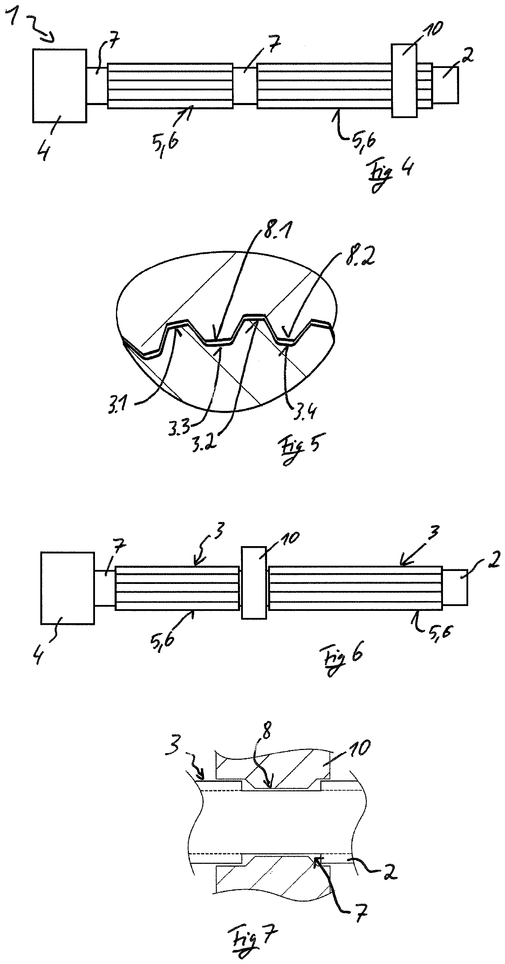

Die Figuren 4, 6 und 9 zeigen verschiedene Stadien, insbesondere Verfahrensschritte des erfindungsgemäßen Verfahrens während der Herstellung einer erfindungsgemäßen gebauten Nockenwelle 1. So zeigt die Figur 4 die Grundwelle 2 mit einem Endstück 4. An der Grundwelle 2 ist bereits die Außenverzahnung 3 ausgebildet. Die Außenverzahnung 3 ist von einem Ausrichtbereich 7 in zwei Teilbereiche unterteilt bzw. zwischen zwei Teilbereichen der Außenverzahnung 3 ist ein Ausrichtbereich 7 ausgebildet. Zwischen dem Endstück 4 und der Außenverzahnung ist ebenfalls ein Ausrichtbereich 7 ausgebildet. Bei einer Montage einer Nabe 10 wird die axial unverschiebbar auf der Grundwelle 2 anzuordnende Nabe 10 in einer Auffädelrichtung A auf einen ersten Teilbereich der Außenverzahnung 3 und damit auf den ersten Formschlussteilbereich 5 der Grundwelle 2 aufgeschoben. Um das Aufschieben der Nabe 10 zu ermöglichen, muss die Nabe 10 gegenüber der Grundwelle 2 winkelausgerichtet werden. Dabei wird die Nabe 10 derart zur Außenverzahnung 3 der Grundwelle 2 ausgerichtet, dass der erste Zahn 8.1 der Innenverzahnung 8 der Nabe 10, welcher eine erste Breite B8.1 aufweist, mit dem ersten Zahnzwischenraum 3.3 der Außenverzahnung 3 der Grundwelle 2, welcher eine definierte Breite B3.3 aufweist, fluchtet. Die zweiten Zähne 8.2 (vgl. Figur 3) der Innenverzahnung 8 der Nabe 10, welche eine zweite Breite B8.2 aufweisen, werden mit dem zweiten Zahnzwischenraum 3.4, (vgl. Figur 2) der Außenverzahnung 3 der Grundwelle 2, welcher eine definierte Breite B3.4 aufweist, fluchtend eingestellt. Die erste Breite B8.1 des Zahnes 8.1 und der erste Zahnzwischenraum 3.3 mit seiner Breite B3.3 sind zueinander korrelierend ausgebildet. Ebenso korreliert die Breite B8.2 des zweiten Zahnes 8.2 mit der Breite B3.4 des zweiten Zahnzwischenraumes 3.4. Mittels einer Relativbewegung zwischen der Grundwelle 2 und der Nabe 10 wird die Nabe 10 auf die Grundwelle 2 aufgefädelt.

Beim Verschieben der Nabe 10 entlang des ersten Formschlussteilbereiches 5, wie in der Figur 4 gezeigt, stellt die jeweilige Paarung eines Zahns mit dem jeweiligen korrelierenden Zahnzwischenraum einen Schiebesitz ein. Diese Situation ist in Figur 5 gezeigt.

Figur 6 zeigt einen weiteren Verfahrensschritt bei der Herstellung einer Ausführungsform einer erfindungsgemäßen gebauten Nockenwelle 1. Die Nabe 10 ist hier soweit axial verschoben, dass ihre Innenverzahnung 8 (siehe Figur 3) in dem Ausrichtbereich 7 aufgenommen wird. Auf die Nabe 10 wirkt hier nicht der Formschlussteilbereich 5, wodurch die Nabe 10 in dieser Situation in ihrer Winkelausrichtung verändert, d.h. relativ zur Grundwelle verdreht werden kann.

Dieser Zustand gemäß der Figur 6 ist in der Figur 7 in einem Längsschnitt dargestellt. Die Innenverzahnung 8 der Nabe 10 ist in dem Ausrichtbereich 7 angeordnet. Die Innenverzahnung 8 der Nabe 10 erstreckt sich in der gezeigten Ausgestaltung nicht über die gesamte Länge der Nabe 10. Der Ausrichtbereich 7 ist so dimensioniert, dass er die Innenverzahnung 8 der Nabe 10 aufnehmen und die Verdrehung der Nabe 10 ermöglichen kann.

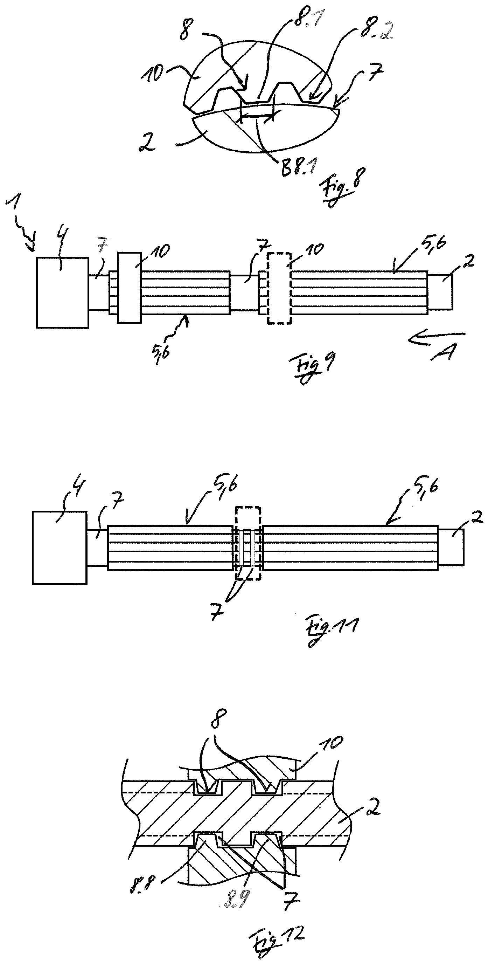

Ebenso ist der in der Figur 6 dargestellte Zustand in der Figur 8 gezeigt, insbesondere in einem Querschnitt durch die Grundwelle 2 und die Nabe 10 während der Positionierung der Nabe 10 im Ausrichtbereich 7. Es ist erkennbar, dass die Innenverzahnung 8 der Nabe 10, insbesondere die Zähne 8.1, 8.2 der Innenverzahnung 8 der Nabe 10 unterschiedliche Breiten B8.1, B8.2 aufweisen. Die Zähne 8.1, 8.2 der Innenverzahnung 8 haben zur Grundwelle 2 keine Form- und/oder Kraftschlussverbindung. Die Nabe 10 kann relativ zur Grundwelle 2 verdreht und winkelausgerichtet werden.

In der Figur 9 ist ein weiterer Verfahrensschritt dargestellt. Nach der Winkelausrichtung der Nabe 10 und der Einstellung der Verzahnungspaarung zwischen Nabe 10 und Grundwelle 2 derart, dass die Überdeckung zwischen Nabe 10 und Grundwelle 2 eingestellt ist, wird die Nabe 10 entlang des Formschlussteilbereichs 5 oder Kraftschlussteilbereiches 6 in deren Endposition geschoben. Beim Verschieben der Nabe 10 entlang der Verzahnung 3 mit eingestellter Überdeckung bzw. ausgebildeter Pressverbindung, bildet die Verzahnung 3 den Kraftschlussteilbereich 6 aus. Ausgehend von der Situation gemäß Figur 6 kann die Nabe in Auffädelrichtung A oder entgegen der Auffädelrichtung A verschoben werden, wie auch mittels der gestrichelt dargestellte Nabe 10, in Figur 9, angedeutet. Soll die Nabe 10 die Endposition entsprechend der linken nicht gestrichelten Position gemäß Figur 9 einnehmen (Verschiebung der Nabe 10 in Auffädelrichtung A), ist auch ein Verschieben der Nabe 10 bis in den an das Endstück 4 grenzenden Ausrichtbereich 7 möglich. Dort würde dann die Winkelausrichtung der Nabe 10 erfolgen. Anschließend könnte die Nabe 10 in Endposition (insbesondere entgegen der Auffädelrichtung A) verschoben werden. Es ist jedoch auch möglich durch entsprechende Winkelverdrehung der Nabe 10 im Ausrichtbereich 7 zwischen den beiden Formschlussteilbereichen 5 oder den beiden Kraftschlussteilbereichen 6 und durch ein nachfolgendes Verschieben der Nabe 10 in Auffädelrichtung A diese Nabe 10 in deren Endposition, insbesondere auf einen Teilbereich der Verzahnung 3 aufzubringen.

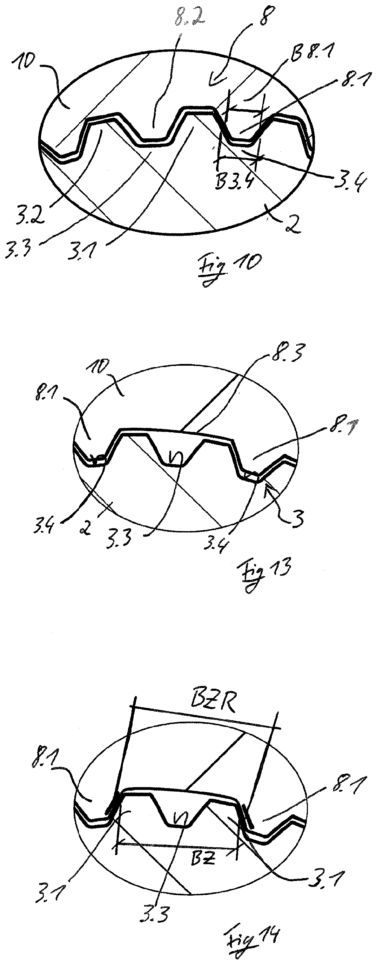

Die Situation gemäß Figur 9, bei der die Nabe 10 in Endposition gebracht wurde, ist auch in der Figur 10 als Querschnitt in einem vergrößerten Ausschnitt dargestellt. Die ersten Zähne 8.1 der Innenverzahnung 8 der Nabe 10, welche eine erste Breite B8.1 aufweisen, sind mit den zweiten Zahnzwischenräumen 3.4 der Außenverzahnung 3 der Grundwelle 2, welche eine zweite Breite B3.4 aufweisen, in Eingriff gebracht. Es sind somit die nicht miteinander korrelierenden Zahnbreiten mit den Zahnzwischenräumen kombiniert. Damit ist zwischen der Grundwelle 2 und der Nabe 10 eine Pressverbindung bzw. Überdeckung ausgebildet und die Nabe axial fixiert. Dementsprechend sind die zweiten Zähne 8.2 der Innenverzahnung 8 der Nabe 10, welche eine zweite Breite B8.2 aufweisen, mit den ersten Zahnzwischenräumen 3.3 der Au-βenverzahnung 3 der Grundwelle 2, welche eine erste Breite B3.3 aufweisen, in Eingriff gebracht. Vorteilhaft sind die ersten Zähne 8.1 der Innenverzahnung 8 der Nabe breiter als die zweiten Zähne 8.2, wobei die ersten Zahnzwischenräume 3.3 der Au-βenverzahnung 3 der Grundwelle 2 breiter sind als die zweiten Zahnzwischenräume 3.4. Es ist auch denkbar, dass die Zähne 8.1 und 8.2 der Innenverzahnung 8 der Nabe 10 eine identische Breite aufweisen. Vorteilhaft sind die ersten Zähne 8.1 der Innenverzahnung 8 der Nabe schmaler als die ersten Zahnzwischenräume 3.3, jedoch breiter als die zweiten Zwischenräume 3.4 der Außenverzahnung 3 der Grundwelle 2.

Die Figur 11 zeigt eine Ausgestaltung, bei der mehrere Formschlussteilbereiche 5 und/oder Kraftschlussteilbereiche 6 und zwischen diesen jeweils ein Ausrichtbereich 7 ausgebildet sind. Die Ausrichtbereiche 7 und die Formschlussteilbereiche 5 und/oder Kraftschlussteilbereiche 6 wechseln einander entlang der Grundwelle 2, in axialer Richtung betrachtet, ab. Die gestrichelt dargestellte Nabe 10 befindet sich in einer Position, in der sie winkelausgerichtet werden kann. Dieser Zustand ist ebenfalls in der Figur 12 gezeigt, welche einen vergrößerten Ausschnitt von Nabe 10 und Grundwelle 2 im Längsschnitt aufzeigt. Hierdurch wird die entsprechende Anordnung der Innenverzahnung 8 in den Ausrichtbereichen 7 verdeutlicht. Die Innenverzahnung 8 der Nabe 10 ist in dieser Weiterbildung axial aufgeteilt, und zwar in zwei Abschnitte 8.8 und 8.9. Prinzipiell ist es auch vorstellbar, dass die Innenverzahnung 8 der Nabe 10 axial in mehr als zwei Abschnitte 8.8, 8.9, insbesondere drei oder mehr Abschnitte, aufgeteilt ist. Vorteilhaft ergibt sich daraus, dass die Formschlussteilbereiche 5 und/oder die Kraftschlussteilbereiche 6 der Grundwelle 2 auf axial kürzeren Abschnitten unterbrochen sind, wie in Figur 12 gezeigt. Die Ausrichtbereiche 7 können auf diese Art jedoch auch in axiale Bereiche der Grundwelle 2 gelegt werden, in denen sie keine oder eine geringere Wirkung für andere Naben der Nockenwelle 1 entfalten. So können die Formschlussteilbereiche 5 beispielsweise in ihrer axialen Erstreckung geringere Unterbrechungen für die Außenverzahnung 3 der Grundwelle 2 darstellen, wodurch die Außenverzahnung 3 für andere Naben und deren Drehmomentübertragung oder axiale Führung besser nutzbar ist.

Eine weitere Ausführungsform einer erfindungsgemäßen gebauten Nockenwelle 1 ist in der Figur 13 als vergrößerter Ausschnitt im Querschnitt dargestellt. Die Nabe 10 weist eine Innenverzahnung 8 mit ersten Zähnen 8.1 und ersten Zahnzwischenräumen 8.3 auf. Auf der Grundwelle 2 ist eine Außenverzahnung 3 mit ersten Zähnen 3.1 sowie ersten 3.3 und zweiten Zahnzwischenräumen 3.4 ausgebildet. Die Innenverzahnung 8 der Nabe 10 weist passend zur Grundwelle 2 bzw. deren Außenverzahnung 3 die halbe Zähnezahl auf. Die ersten Zähne 8.1 und die ersten 3.3 und zweiten Zahnzwischenräume 3.4 sind derart dimensioniert, dass bei der Kombination der ersten Zähne 8.1 und der ersten Zahnzwischenräume 3.3 zwischen diesen ein Schiebesitz ausbildet wird. Eine Kombination bzw. Paarung der ersten Zähne 8.1 mit den zweiten Zahnzwischenräumen 8.4 bewirkt die Ausbildung eines Pressverbandes an den jeweiligen Verzahnungsflanken. Vorteilhaft an dieser Ausgestaltung ist, dass die Winkelausrichtung der Nabe 10 in kleineren Schritten bzw. Winkelschritten erfolgen kann, die hier beispielsweise der halben Zähnezahl der Nabe 10 entsprechen. In Abhängigkeit der gewünschten einstellbaren Winkelschritte kann das Verhältnis der Zähnezahl zu den Zahnzwischenräumen verändert werden. Gleichzeitig kann der Aufwand für die Ausbildung einer aufwendigen und feinen Innenverzahnung 8 der Nabe 10 reduziert werden.

Anhand der in Figur 13 dargestellten Zahneinteilung sollte verdeutlicht werden, dass die ersten 3.3 und zweiten Zahnzwischenräume 3.4 der Außenverzahnung 3 der Grundwelle 2 nicht zwingend an die Ausbildung bzw. an das vorhanden sein von ersten 3.1 und zweiten Zähnen 3.2 der Außenverzahnung 3 der Grundwelle 2 gebunden sind. Ferner sind auch Variationen in der Verteilung über den Umfang der Grundwelle 2 oder Aufnahmeöffnung der Nabe 10 möglich. Bei der in Figur 13 dargestellten Ausgestaltung weist die Innenverzahnung 8 der Nabe 10 weniger erste 8.1 oder zweite Zähne 8.2 auf, als die Außenverzahnung 3 der Grundwelle erste 3.3 oder zweite Zahnzwischenräume 3.4. So können mehrere Zähne in einen Zahnzwischenraum der Außenverzahnung 3 der Grundwelle eingreifen und die Nabe 10 kann in ihrer Winkelausrichtung in kleineren Schritten winkelausgerichtet auf der Grundwelle 2 fixiert werden.

Ferner kann die Zahnbreite bzw. die Breite der Innen- und/ oder Außenverzahnung entsprechend variiert werden.

Im Sinne der Erfindung ist auch eine äquivalente Auslegung der zuvor genannten Kombination von Zahn und Zahnzwischenraum denkbar, bei der die zuvor für Grundwelle 2 und Nabe 10 erläuterten Verhältnisse umgekehrt auf das jeweils andere Bauteil angewandt werden.

Zudem ist es denkbar, dass eine zur Ausbildung einer Pressverbindung zwischen Nabe 10 und Grundwelle 2 genutzte Zahnbreite BZ, wie in der Figur 14 gezeigt, auf mehrere Zähne 3.1 aufgeteilt wird. So ist die wirksame Zahnbreite BZ beispielsweise auf zwei erste Zähne 3.1 aufgeteilt, die an der Innenverzahnung 8 der Nabe 10 benachbart zueinander ausgebildet sind. Die am Pressverband beteiligten Zahnflanken sind, wie beispielsweise in Figur 14 gezeigt, die einander zu gewandten Zahnflanken der Zähne 8.1 der Innenverzahnung 8 und die voneinander abgewandten Zahnflanken der Zähne 3.1 der Außenverzahnung 3. Die entsprechenden Bereiche der Zahnflanken sind in Figur 14 hervorgehoben. Die für die in Figur 14 gezeigte Pressverbindung wirksame Zahnbreite wird demnach auf dem Umfangsabschnitt mittels zweier Zähne 3.1 und einen Zahnzwischenraum 3.3 der Außenverzahnung 3 gebildet. Ein entsprechender Zahnzwischenraum der Nabe 10 für die Pressverbindung von Nabe 10 und Grundwelle 2 würde beispielsweise die Breite BZR aufweisen. Die bei der Montage erforderliche Spielpassung ist über die Kombination der Zähne 8.1 mit den Zahnzwischenräumen 3.3 zu erzeugen. Wie die Ausgestaltung gemäß Figur 14 zeigt, stehen für die Winkelausrichtung somit unabhängig von der Zahnbreite eines einzelnen Zahnes andere Winkelschritte zur Verfügung. Ferner steht die in Figur 14 gezeigte Ausgestaltung beispielhaft für die Umkehr der an der Pressverbindung zwischen Zahn und Zahnzwischenraum beteiligten Mittel. So wird der hier für die Pressverbindung genutzte Zahn durch die Außenverzahnung 3 und der Zahnzwischenraum durch die Nabe 10 bereitgestellt bzw. ausgebildet.

Bei einer weiteren bevorzugten erfindungsgemäßen Ausgestaltung weist die Innenverzahnung der Nabe weniger Zähne auf, als die Außenverzahnung der Grundwelle Zahnzwischenbereiche. Vorteilhaft können mehrere Zähne in einen Zahnzwischenraum der Außenverzahnung der Grundwelle eingreifen und die Nabe kann in ihrer Winkelausrichtung in kleineren Schritten winkelausgerichtet auf der Grundwelle fixiert werden.

### Bezugszeichenliste

- 1: Nockenwelle
- 2: Grundwelle
- 3: Außenverzahnung
- 3.1: erster Zahn der Außenverzahnung
- 3.2: zweiter Zahn der Außenverzahnung
- 3.3: erster Zahnzwischenraum der Außenverzahnung
- 3.4: zweiter Zahnzwischenraum der Außenverzahnung
- 4: Endstück
- 5: Formschlussteilbereich
- 6: Kraftschlussteilbereich
- 7: Ausrichtbereich
- 8: Innenverzahnung der Nabe
- 8.1: erster Zahn der Innenverzahnung
- 8.2: zweiter Zahn der Innenverzahnung
- 8.3: erster Zahnzwischenraum der Innenverzahnung
- 8.4: zweiter Zahnzwischenraum der Innenverzahnung
- 8.8: Abschnitt der Innenverzahnung
- 8.9: Abschnitt der Innenverzahnung

- 10: erste Nabe
- 20: zweite Nabe

- A: Auffädelrichtung
- BZ: wirksame Zahnbreite einer Ausgestaltung
- BZR: wirksamer Zahnzwischenraum einer Ausgestaltung

## Patentansprüche

1. Gebaute Nockenwelle (1) für eine Brennkraftmaschine, wobei die Nockenwelle (1) eine Grundwelle (2) und eine sich zumindest abschnittsweise axial entlang der Grundwelle (2) erstreckende Außenverzahnung (3) umfasst, sowie mindestens eine Nabe (10) mit einer Innenverzahnung (8), welche mit der Au-βenverzahnung (3) der Grundwelle (2) derart korreliert, dass die Nabe (10) drehfest und axial unverschiebbar mit der Grundwelle (2) verbunden ist, wobei die Außenverzahnung (3) mindestens einen sich axial zumindest abschnittsweise entlang der Grundwelle (2) erstreckenden Formschlussteilbereich (5) oder einen Kraftschlussteilbereich (6) aufweist, um die Nabe (10) zumindest formschlüssig oder kraftschlüssig anzuordnen, und wobei sich zumindest an den Formschlussteilbereich (5) oder den Kraftschlussteilbereich (6) zumindest ein sich wenigstens abschnittsweise axial entlang der Grundwelle (2) erstreckender Ausrichtbereich (7) zum Winkelausrichten der Nabe (10) anschließt, **dadurch gekennzeichnet, dass** die Außenverzahnung (3) wenigstens des Formschlussteilbereiches (5) oder des Kraftschlussteilbereiches (6) wenigstens zwei zwischen den Zähnen (3.1, 3.2) ausgebildete Zahnzwischenräume (3.3, 3.4) mit zueinander unterschiedlicher Breite und die Innenverzahnung (8) der Nabe (10) zumindest einen mit dem ersten Zahnzwischenraum (3.3) korrelierenden und eine erste Breite (B8.1) aufweisenden ersten Zahn (8.1) umfasst, und wobei der eine erste Breite (B8.1) aufweisende erste Zahn (8.1) der Nabe (10) mit dem einen eine erste Breite (B3.3) aufweisenden ersten Zahnzwischenraum (3.3) der Grundwelle (2) einen Schiebesitz ausbildet, und wobei zumindest die Kraftschlussverbindung der Nabe (10) mit der Grundwelle (2) zur axialen Fixierung der Nabe (10) aufgrund einer zwischen mindestens dem einen eine zweite Breite (B3.4) aufweisenden zweiten Zahnzwischenraum (3.4) der Außenverzahnung (3) der Grundwelle und dem nicht korrelierenden eine erste Breite (B8.1) aufweisenden ersten Zahn (8.1) der Innenverzahnung (8) der Nabe (10) ausgebildeten Pressverbindung besteht, wobei die wenigstens zwei unterschiedlich breiten Zahnzwischenräume (3.3, 3.4) der Außenverzahnung (3) umlaufend in einander abwechselnder Folge ausgebildet sind, wobei die Innenverzahnung (8) der Nabe (10) wenigstens einen zweiten Zahn (8.2) mit einer zweiten Breite (B8.2) aufweist und wobei der zweite Zahn (8.2) jeweils mit dem ersten Zahnzwischenraum (3.3) und dem zweiten Zahnzwischenraum (3.4) der Grundwelle (2) einen Schiebesitz ausbildet und die ersten (8.1) und zweiten Zähne (8.2) umlaufend in einander abwechselnder Folge ausgebildet sind.

2. Nockenwelle (1) nach Anspruch 1, **dadurch gekennzeichnet, dass** der die erste Breite (B8.1) aufweisende Zahn (8.1) der Innenverzahnung (8) der Nabe (10) umlaufend mehrfach ausgebildet und passend zu den ersten und zweiten Zahnzwischenräumen (3.3, 3.4) verteilt ist.

3. Nockenwelle (1) nach einem der Ansprüche 1 bis 2, **dadurch gekennzeichnet, dass** der Formschlussteilbereich (5) und/oder der Kraftschlussteilbereich (6) durch den Ausrichtbereich (7) in wenigstens zwei axial beabstandete Formschlussteilbereiche (6) und/oder Kraftschlussteilbereiche (7) aufgeteilt ist/sind.

4. Nockenwelle (1) nach einem der Ansprüche 1 bis 3, **dadurch gekennzeichnet dass** sich mehrere Formschlussteilbereiche (5) und/oder Kraftschlussteilbereiche (6) und mehrere Ausrichtbereiche (7) einander abwechselnd in axialer Richtung entlang der Grundwelle (2) erstrecken.

5. Nockenwelle (1) nach einem der Ansprüche 1 bis 4, **dadurch gekennzeichnet, dass** die Innenverzahnung (8) der Nabe (10) mit ihrer axialen Erstreckung in wenigstens zwei Teilbereiche aufgeteilt ist.

6. Verfahren zur Herstellung einer gebauten Nockenwelle (1) gemäß einem der vorangegangenen Ansprüche 1 bis 5 umfassend folgende Verfahrensschritte:
- Bereitstellen einer Grundwelle (2),
- Oberflächenbearbeiten der Grundwelle (2) auf zumindest einem Teilbereich, zum Erzeugen der sich zumindest abschnittsweise axial entlang der Grundwelle (2) erstreckenden Außenverzahnung (3), welche für die zumindest eine Nabe (10) mit ihrer Innenverzahnung (8) wenigstens den Formschlussteilbereich (5) oder den Kraftschlussteilbereich (6) bereitstellt, um die Verbindung mit der Grundwelle (2) zu gewährleisten, wobei die Außenverzahnung (3) wenigstens zwei die zwei unterschiedlich breiten Zahnzwischenräume (3.3, 3.4) ausbildenden Zähne (3.1, 3.2) aufweist, und
- Ausbilden des Ausrichtbereiches (7) auf der Grundwelle (2), wobei sich der Ausrichtbereich (6) zumindest an den Formschlussteilbereich oder den Kraftschlussteilbereich axial anschließt,
- Bereitstellen der Nabe (10) mit zumindest abschnittsweise in axialer Richtung verlaufender Innenverzahnung (8), welche mit der Außenverzahnung (3) der Grundwelle (2) korreliert und mindestens einen Zahn (8.1) mit einer Zahnbreite (B8.1) aufweist, wobei der erste Zahnzwischenraum (3.3) breiter ausgebildet ist als der zweite Zahnzwischenraum (3.4),
- Montieren der Nabe (10), wobei die Nabe (10) derart winkelausgerichtet auf die Außenverzahnung (3) der Grundwelle (2) aufgefädelt wird, dass die miteinander korrelierende Außenverzahnung (3) der Grundwelle (2) und die Innenverzahnung (8) der Nabe (10) einen Schiebesitz ausbilden,
- axiales Verschieben der Nabe (10) zumindest entlang des Formschlussteilbereiches (5) oder des Kraftschlussteilbereiches (6) der Grundwelle, bis die Innenverzahnung (8) der Nabe (10) in den Ausrichtbereich (7) eingeschoben ist,
- winkelgenaues Ausrichten der Nabe (10) derart relativ zur Außenverzahnung (3) der Grundwelle (2), dass zumindest eine Paarung bestehend aus dem eine Breite (B3.4) aufweisenden zweiten Zahnzwischenraum (3.4) der Außenverzahnung (3) und dem eine erste Breite (B8.1) aufweisenden Zahn (8.1) der Innenverzahnung (8) axial fluchtet,
- axiales Verschieben der Nabe (10) zumindest entlang des Formschlussteilbereiches (5) oder des Kraftschlussteilbereiches (6) der Grundwelle (2) bis zu deren Endposition, wobei aufgrund der vorhandenen Überdeckung zwischen dem eine Breite (B3.2) aufweisenden Zahnzwischenraum der Außenverzahnung (3) der Grundwelle (2) und dem einen eine erste Breite (B8.1) aufweisenden Zahn (8.1) der Innenverzahnung (8) der Nabe (10) eine Pressverbindung zwischen der Grundwelle (2) und der Nabe (10) ausgebildet wird, wodurch die Nabe (10) gegen axiales Verschieben fixiert wird.

7. Verfahren zur Herstellung einer gebauten Nockenwelle (1) gemäß Anspruch 6, **dadurch gekennzeichnet, dass** zumindest der Formschlussteilbereich (5) oder der Kraftschlussteilbereich (6) durch den Ausrichtbereich (7) in wenigstens zwei axial beabstandete Formschlussteilbereiche (5) oder Kraftschlussteilbereiche (6) aufgeteilt wird.

8. Verfahren zur Herstellung einer gebauten Nockenwelle (1) gemäß einem der Ansprüche 6 oder 7, **dadurch gekennzeichnet, dass** der Ausrichtbereich (7) durch Aussparungen in der Außenverzahnung (3), beispielsweise durch Fräsen oder Schleifen, ausgebildet wird.

9. Verfahren zur Herstellung einer gebauten Nockenwelle (1) gemäß einem der Ansprüche 6 bis 8, **dadurch gekennzeichnet, dass** der die erste Breite (B8.1) aufweisende Zahn (8.1) der Innenverzahnung (8) der Nabe (10) umlaufend mehrfach ausgebildet und passend zu den Zahnzwischenräumen (3.3) verteilt wird.

## Claims

1. An assembled camshaft (1) for an internal combustion engine, the camshaft (1) comprising a base shaft (2) and an external toothing (3) extending at least partially axially along the base shaft (2), as well as at least one hub (10) with an internal toothing (8), which correlates with the external toothing (3) of the base shaft (2) in such a way that the hub (10) is rotationally fixed and axially non-displaceable connected to the base shaft (2), wherein the external toothing (3) has at least one form-locking part region (5) or a force-locking part region (6) extending at least partially axially along the base shaft (2) to arrange the hub (10) at least in a form-locking or force-locking manner, and wherein at least one alignment region (7) extending at least partially axially along the base shaft (2) for angular alignment of the hub (10) adjoins at least the form-locking part region (5) or the force-locking part region (6), **characterized in that** the external toothing (3) of at least the form-locking part region (5) or the force-locking part region (6) has at least two tooth spaces (3.3, 3.4) of different widths formed between the teeth (3.1, 3.2), and the internal toothing (8) of the hub (10) comprises at least one first tooth (8.1) correlating with the first tooth space (3.3) and having a first width (B8.1), and wherein the first tooth (8.1) of the hub (10) with the first width (B8.1) forms a sliding fit with the first tooth space (3.3) of the base shaft (2), and wherein at least the force-locking connection of the hub (10) with the base shaft (2) for axial fixation of the hub (10) consists of a press fit formed between at least the second tooth space (3.4) of the external toothing (3) of the base shaft having a second width (B3.4) and the first tooth (8.1) of the internal toothing (8) of the hub (10) having the first width (B8.1), wherein the at least two tooth spaces (3.3, 3.4) of different widths of the external toothing (3) are formed circumferentially in an alternating sequence, and wherein the internal toothing (8) of the hub (10) comprises at least one second tooth (8.2) with a second width (B8.2), and wherein the second tooth (8.2) forms a sliding fit with both the first tooth space (3.3) and the second tooth space (3.4) of the base shaft (2), and the first teeth (8.1) and the second teeth (8.2) are formed circumferentially in an alternating sequence.

2. The camshaft (1) according to claim 1, **characterized in that** the tooth (8.1) of the internal toothing (8) of the hub (10) having the first width (B8.1) is formed circumferentially multiple times and is distributed to match the first and second tooth spaces (3.3, 3.4).

3. The camshaft (1) according to one of claims 1 to 2, **characterized in that** the form-locking part region (5) and/or the force-locking part region (6) is/are divided by the alignment region (7) into at least two axially spaced form-locking part regions (6) and/or force-locking part regions (7).

4. The camshaft (1) according to one of claims 1 to 3, **characterized in that** a plurality of form-locking part regions (5) and/or force-locking part regions (6) and a plurality of alignment regions (7) extend alternately in the axial direction along the base shaft (2).

5. The camshaft (1) according to one of claims 1 to 4, **characterized in that** the internal toothing (8) of the hub (10) is divided in its axial extension into at least two partial regions.

6. A method for manufacturing an assembled camshaft (1) according to any one of the preceding claims 1 to 5, comprising the following method steps:
• Providing a base shaft (2),
• Surface machining the base shaft (2) on at least one partial region to produce the external toothing (3) extending at least partially axially along the base shaft (2), which provides at least the form-locking part region (5) or the force-locking part region (6) for the at least one hub (10) with its internal toothing (8) to ensure the connection with the base shaft (2), wherein the external toothing (3) has at least two teeth (3.1, 3.2) forming the two tooth spaces (3.3, 3.4) of different widths, and
• Forming the alignment region (7) on the base shaft (2), wherein the alignment region (7) axially adjoins at least the form-locking part region or the force-locking part region,
• Providing the hub (10) with an internal toothing (8) extending at least partially in the axial direction, which correlates with the external toothing (3) of the base shaft (2) and has at least one tooth (8.1) with a tooth width (B8.1), wherein the first tooth space (3.3) is formed wider than the second tooth space (3.4),
• Mounting the hub (10), wherein the hub (10) is threaded onto the external toothing (3) of the base shaft (2) in an angularly aligned manner such that the correlating external toothing (3) of the base shaft (2) and the internal toothing (8) of the hub (10) form a sliding fit,
• Axially displacing the hub (10) at least along the form-locking part region (5) or the force-locking part region (6) of the base shaft until the internal toothing (8) of the hub (10) is pushed into the alignment region (7),
• Angularly accurate alignment of the hub (10) relative to the external toothing (3) of the base shaft (2) in such a way that at least one pairing consisting of the second tooth space (3.4) of the external toothing (3) with a width (B3.4) and the tooth (8.1) of the internal toothing (8) with a first width (B8.1) are axially aligned,
• Axially displacing the hub (10) at least along the form-locking part region (5) or the force-locking part region (6) of the base shaft (2) until its end position, whereby due to the existing overlap between the tooth space of the external toothing (3) of the base shaft (2) with a width (B3.2) and the tooth (8.1) of the internal toothing (8) of the hub (10) with a first width (B8.1), a press connection is formed between the base shaft (2) and the hub (10), as a result of which the hub (10) is fixed against axial displacement.

7. A method for manufacturing an assembled camshaft (1) according to claim 6, **characterized in that** at least the form-locking part region (5) or the force-locking part region (6) is divided by the alignment region (7) into at least two axially spaced form-locking part regions (5) or force-locking part regions (6).

8. A method for manufacturing an assembled camshaft (1) according to one of claims 6 or 7, **characterized in that** the alignment region (7) is formed by recesses in the external toothing (3), for example by milling or grinding.

9. A method for manufacturing an assembled camshaft (1) according to one of claims 6 to 8, **characterized in that** the tooth (8.1) of the internal toothing (8) of the hub (10) having the first width (B8.1) is formed circumferentially multiple times and distributed to match the tooth spaces (3.3).

## Revendications

1. Arbre à cames assemblé (1) pour un moteur à combustion interne, l'arbre à cames (1) comprenant un arbre de base (2) et une denture externe (3) s'étendant au moins partiellement de manière axiale le long de l'arbre de base (2), ainsi qu'au moins un moyeu (10) avec une denture interne (8), laquelle est en corrélation avec la denture externe (3) de l'arbre de base (2) de manière à ce que le moyeu (10) soit relié de manière fixe en rotation et non déplaçable axialement avec l'arbre de base (2), la denture externe (3) comprenant au moins une zone de blocage de forme (5) ou une zone de blocage de force (6) s'étendant au moins partiellement de manière axiale le long de l'arbre de base (2), pour disposer le moyeu (10) au moins de manière fixe en forme ou fixe en force, et au moins une zone d'alignement (7) s'étendant au moins partiellement de manière axiale le long de l'arbre de base (2) suit la zone de blocage de forme (5) ou la zone de blocage de force (6) pour aligner angulairement le moyeu (10), **caractérisé en ce que** la denture externe (3) de la zone de blocage de forme (5) ou de la zone de blocage de force (6) comprend au moins deux espaces entre dents (3.3, 3.4) formés entre les dents (3.1, 3.2) ayant des largeurs différentes, et la denture interne (8) du moyeu (10) comprend au moins une première dent (8.1) corrélant avec le premier espace entre dents (3.3) et ayant une première largeur (B8.1), la première dent (8.1) du moyeu (10) ayant une première largeur (B8.1) formant un ajustement coulissant avec le premier espace entre dents (3.3) ayant une première largeur (B3.3) de l'arbre de base (2), et la connexion de blocage de force du moyeu (10) avec l'arbre de base (2) pour la fixation axiale du moyeu (10) est réalisée en raison d'une liaison par pression formée entre au moins le second espace entre dents (3.4) de la denture externe (3) de l'arbre de base ayant une seconde largeur (B3.4) et la première dent (8.1) de la denture interne (8) du moyeu (10) n'étant pas corrélée ayant une première largeur (B8.1), les au moins deux espaces entre dents (3.3, 3.4) de la denture externe (3) ayant des largeurs différentes étant formés de manière alternée tout autour, la denture interne (8) du moyeu (10) ayant au moins une deuxième dent (8.2) avec une deuxième largeur (B8.2), et la deuxième dent (8.2) formant un ajustement coulissant avec à la fois le premier espace entre dents (3.3) et le deuxième espace entre dents (3.4) de l'arbre de base (2), les premières (8.1) et deuxièmes dents (8.2) étant formées de manière alternée tout autour.

2. Arbre à cames (1) selon la revendication 1, **caractérisé en ce que** la dent (8.1) de la denture interne (8) du moyeu (10) ayant la première largeur (B8.1) est formée plusieurs fois tout autour et est répartie en correspondance avec les premiers et deuxièmes espaces entre dents (3.3, 3.4).

3. Arbre à cames (1) selon l'une des revendications 1 à 2, **caractérisé en ce que** la zone de blocage de forme (5) et/ou la zone de blocage de force (6) est/ sont divisées en au moins deux zones de blocage de forme (6) et/ou de force (7) espacées axialement par la zone d'alignement (7).

4. Arbre à cames (1) selon l'une des revendications 1 à 3, **caractérisé en ce que** plusieurs zones de blocage de forme (5) et/ou zones de blocage de force (6) et plusieurs zones d'alignement (7) s'étendent alternativement en direction axiale le long de l'arbre de base (2).

5. Arbre à cames (1) selon l'une des revendications 1 à 4, **caractérisé en ce que** la denture interne (8) du moyeu (10) est divisée en au moins deux sections avec son extension axiale.

6. Procédé de fabrication d'un arbre à cames assemblé (1) selon l'une des revendications précédentes 1 à 5 comprenant les étapes de procédé suivantes :
• Fournir un arbre de base (2),
• Traitement de surface de l'arbre de base (2) sur au moins une section pour créer la denture externe (3) s'étendant au moins partiellement de manière axiale le long de l'arbre de base (2), laquelle fournit pour au moins un moyeu (10) avec sa denture interne (8) au moins la zone de blocage de forme (5) ou la zone de blocage de force (6) pour garantir la connexion avec l'arbre de base (2), la denture externe (3) ayant au moins deux dents (3.1, 3.2) formant les deux espaces entre dents de largeurs différentes (3.3, 3.4),
• Former la zone d'alignement (7) sur l'arbre de base (2), la zone d'alignement (6) s'étendant axialement au moins au niveau de la zone de blocage de forme ou de la zone de blocage de force,
• Fournir le moyeu (10) avec une denture interne (8) s'étendant au moins partiellement en direction axiale, laquelle est corrélée avec la denture externe (3) de l'arbre de base (2) et comprend au moins une dent (8.1) ayant une largeur de dent (B8.1), le premier espace entre dents (3.3) étant plus large que le second espace entre dents (3.4),
• Monter le moyeu (10), le moyeu (10) étant aligné angulairement de manière à être enfilé sur la denture externe (3) de l'arbre de base (2) de manière à ce que la denture externe (3) corrélant de l'arbre de base (2) et la denture interne (8) du moyeu (10) forment un ajustement coulissant,
• Déplacer axialement le moyeu (10) au moins le long de la zone de blocage de forme (5) ou de la zone de blocage de force (6) de l'arbre de base, jusqu'à ce que la denture interne (8) du moyeu (10) soit enfoncée dans la zone d'alignement (7),
• Aligner précisément le moyeu (10) en rotation par rapport à la denture externe (3) de l'arbre de base (2) de manière à ce qu'au moins un couple composé de la deuxième denture (3.4) ayant une largeur (B3.4) de la denture externe (3) et de la denture interne (8.1) ayant une première largeur (B8.1) de la denture interne (8) soit axialement aligné,
• Déplacer axialement le moyeu (10) au moins le long de la zone de blocage de forme (5) ou de la zone de blocage de force (6) de l'arbre de base (2) jusqu'à sa position finale, une connexion par pression étant formée entre la denture (3) de l'arbre de base (2) ayant une largeur (B3.2) et la denture interne (8) ayant une première largeur (B8.1) du moyeu (10), fixant ainsi le moyeu (10) contre tout déplacement axial.

7. Procédé de fabrication d'un arbre à cames assemblé (1) selon la revendication 6, **caractérisé en ce qu'**au moins la zone de blocage de forme (5) ou la zone de blocage de force (6) est divisée en au moins deux zones de blocage de forme (5) ou de force (6) espacées axialement par la zone d'alignement (7).

8. Procédé de fabrication d'un arbre à cames assemblé (1) selon l'une des revendications 6 ou 7, **caractérisé en ce que** la zone d'alignement (7) est formée par des évidements dans la denture externe (3), par exemple par fraisage ou meulage.

9. Procédé de fabrication d'un arbre à cames assemblé (1) selon l'une des revendications 6 à 8, **caractérisé en ce que** la dent (8.1) de la denture interne (8) du moyeu (10) ayant la première largeur (B8.1) est formée plusieurs fois tout autour et est répartie en correspondance avec les espaces entre dents (3.3).
